# EUROPEAN PATENT SPECIFICATION

(11) **EP 1 695 628 B1**
(45) Date of publication and mention of the grant of the patent: **20.01.2010**
(21) Application number: 04787841.8
(22) Date of filing: 10.09.2004
(51) Int. Cl.: A23F 3/14, A23L 2/00

(54) **BOTTLED BEVERAGE**
FLASCHENGETRÄNK
BOISSON EN BOUTEILLE

(30) Priority: 18.12.2003 JP 2003420907
(43) Date of publication of application: 30.08.2006
(73) Proprietor: KAO CORPORATION, Chuo-Ku,Tokyo 103 (JP)
(72) Inventor: IWASAKI, Masaki;C/O KAO CORPORATION RESEARCH LABO, Tokyo 1318501 (JP); HOSHINO, Eiichi; C/O KAO CORPORATION RESEARCH LABO, Tokyo 1318501 (JP); HOSOYA, Naoki; C/O KAO CORPORATION RESEARCH LABORA, Tokyo,1318501 (JP); YAMAMOTO, Shinji; C/O KAO CORPORATION RESEARCH LAB, Tokyo 1318501 (JP)
(74) Representative: HOFFMANN EITLE
(86) International application number: PCT/JP2004/013200
(87) International publication number: WO 2005/060760

(56) References cited:
- WO-A-02/39822
- WO-A-02/065846
- JP-A- 8 000 173
- JP-A- 10 501 407
- JP-A- 57 016 649
- JP-A- 2003 169 603

## Description

### Field of the Invention

This invention relates to a packaged beverage mixed with a green tea extract, which contains catechins at high concentration, is good in taste, and is also excellent in color tone stability when stored at high temperature in a clear container.

### Background of the Invention

Catechins have been reported to have a suppressing effect on the increase of cholesterol and an inhibitory effect on α-amylase activity (see, for example, Patent Documents 1 and 2). For such physiological effects to manifest, it is necessary for an adult to drink 4 to 5 cups of tea per day. Thus there has been a growing demand for a technological method by which catechins can be mixed in beverages at high concentration in order to facilitate the ingestion of a large amount of catechins. As an instance thereof, there is a method by which catechins are added in a dissolved form to a beverage by using a concentrate of a green tea concentrate (see, for example, Patent Documents 3 to 5).

If, however, a commercial concentrate of green tea extract is used without any modification, it is not suitable for long-term drinking required to exert the physiological effects of catechins because the resulting beverage has strong astringency and bitterness under the influence of the components contained in the concentrate of green tea extract and gives a poor feeling when it is swallowed. On the other hand, there is a method by which dextrin is mixed with a beverage so that astringency, which is one of the elements that make the beverage unsuited for long-term drinking, can be reduced. This method, however, is not sufficient in the case where catechins are mixed at high concentration. Further, there is a beverage with a sweetener, but this beverage is still not suited for long-term drinking because its commercially available concentrate is extremely astringent and bitter; tends to leave unpleasant taste behind; is not free of an unnecessary flavor or taste derived from green tea; causes changes in bitterness and stringency especially when stored at high temperatures; and is not good in the stability of bitterness and stringency (for example, Patent Document 6). Moreover, the beverage is prone to changes in external appearance when stored at high temperatures and, and its color tone cannot continue to be stable over a long term when filled in a clear container.
Patent Document 1: JP-A-60-156614
Patent Document 2: JP-A-03-133928
Patent Document 3: JP-A-2002-142677
Patent Document 4: JP-A-8-298930
Patent Document 5: JP-A-8-109178
Patent Document 6: JP-A-10-501407
EP 1 297 749 A1 discloses a beverage having a concentrated or purified tea extract incorporated therein and containing (A) non-polymer catechins from 0.092 to 0.5 wt.% and (B) quinic acid in a weight ratio of B/A falling within a range of from 0.01 to 1.0. This beverage was found to be improved in terms of aftertaste.
WO 95/33385 discloses a beverage enhancing cellular hydration and drinkability containing 0.01 to 0.35% flavanols, 0.01 to 0.3% sodium ions, and 0.005 to 0.08% potassium ions.

The present invention provides a packaged beverage of pH 2 to 6 with a green tea extract mixed therein, containing the following ingredients (A) to (E):
(A) from 0.1 to 0.3 wt% of non-polymer catechins,
(B) quinic acid or a salt thereof,
(C) from 0.001 to 10 wt% of a sweetener,
(D) from 0.003 to 0.2 wt% of sodium ions, and
(E) from 0.003 to 0.12 wt% of potassium ions,
wherein a content weight ratio [(B) / (A) ] of the quinic acid or salt thereof (B) to the non-polymer catechins (A) is from 0.002 to 0.1.

### Embodiments of the Invention

An object of the present invention is to provide a packaged beverage, which owing to its formulation adjusted in ingredients, contains catechins at high concentration, is reduced in bitterness and astringency and is suited for long-term drinking despite the use of a green tea extract, is excellent in the stability of bitterness and astringency and also in the feeling when it is swallowed, hardly changes in its external appearance when stored at high temperatures, and remains stable in color tone even when filled in a clear container.

The present inventors have investigated to improve the taste and flavor of a packaged beverage, which contains catechins at high concentration, such that the packaged beverage would become acceptable for long-term drinking. As a result, it has been found that a beverage - which contains catechins at high concentration, is free of the flavor and taste of green tea and is suited for long-term drinking, is excellent in the stability of bitterness and astringency and its feeling when it is swallowed, and remains stable in color tone over a long term even when filled and stored in a clear container - can be obtained when the ratio of quinic acid to non-polymer catechins is controlled and the concentrations of a sweetener, sodium ions and potassium ions are also controlled.

The packaged beverage according to the present invention contains catechins at high concentration, is free not only of the flavor and taste of green tea but also of other foreign flavor and taste, is reduced in bitterness and astringency and is suited for long-term drinking, is excellent in the stability of bitterness and astringency and its feeling as it passes down the throat, remains stable in color tone over a long term even when filled in a clear container and stored at high temperatures, and is useful, for example, as a non-tea-based, packaged beverage.

The term "non-polymer catechins (A) " as used herein is a generic term, which collectively encompasses non-epicatechins such as catechin, gallocatechin, catechingallate and gallocatechingalllate, and epicatechins such as epicatechin, epigallocatechin, epicatechingallate and epigallocatechingallate.

The packaged beverage according to the present invention contains non-polymer catechins (A), each of which is in a dissolved form in water, at a content of from 0.1 to 0.3 wt%, preferably from 0.1 to 0.26 wt%, more preferably from 0.1 to 0.15 wt%. Insofar as the content of non-polymer catechins falls within the above-described range, a great deal of non-polymer catechins can be taken with ease, and from the standpoint of the color tone of the beverage shortly after its preparation, this content range is also preferred. The concentration of the non-polymer catechins can be controlled by relying upon the amount of a green tea extract to be mixed.
Further, the daily intake of green tea required for an adult to exhibit the effects of the promotion of accumulated fat burning, the promotion of dietary fat burning and the promotion of β-oxidation gene expression in the liver is considered to be preferably 300 mg or more, more preferably 450 mg or more, still more preferably 500 mg or more in terms of non-polymer catechins. Specifically, it has been confirmed that an anti-puffiness effect and/or visceral fat reducing effect can be brought about by ingesting a beverage, which contains 483 mg, 555 mg or 900 mg of non-polymer catechins per package (JP-A-2002-326932).
Therefore, the daily intake of the packaged beverage according to the present invention by an adult can also be preferably 300 mg or more, more preferably 450 mg or more, still more preferably 500 mg or more in terms of non-polymer catechins. From the standpoint of assuring to meet the minimum daily intake requirement, the non-polymer catechins can be mixed in an amount of preferably 300 mg or more, more preferably 450 mg or more, still more preferably 500 mg or more in each package (350 to 500 mL) of the packaged beverage according to present claim 1.

In the packaged beverage according to the present invention, the content weight ratio [(B) / (A) ] of the quinic acid or salt thereof (B) to the non-polymer catechins (A) is from 0.002 to 0.1, preferably from 0. 002 to 0.05. A [(B) / (A) ] ratio in this range is used because neither very strong bitterness or astringency nor strong puckeriness is produced, sufficient effect is available for an improvement in the residual perception of the beverage, the sourness of quinic acid is adequate, and the flavor and taste of the beverage are not impaired. Such a [(B) / (A) ] ratio is also used, because the beverage is free of a residual perception remaining on the tongue after drinking although such a residual perception is specific to beverages with catechins contained at high concentration and therefore, the beverage is good in the disappearance of an aftertaste. Quinic acid can be added in an acid form or a salt form. As an alternative, it can also be added in the form of a composition with quinic acid or a quinic acid salt contained therein. Examples of the quinic acid salt include sodium quinate and potassium quinate.

The mechanisms of the effects of quinic acid for the reduction of the bitterness and astringency of non-polymer catechins and the improvement in the disappearance of the aftertaste have not been elucidated yet. It is, however, presumed that quinic acid forms weakly-associated units with catechins through hydrogen bonds and the catechins are adsorbed on the gustatory cells themselves to prevent the catechins from contacting the bitterness receptors.

When oxalic acid is contained in the beverage, the oxalic acid may interact with tea-derived ingredients and mixed ingredients, which are contained in the beverage, to form precipitates. In the packaged beverage, the content of oxalic acid is preferably 0.06 weight part or lower relative to the non-polymer catechins (A). The content of oxalic acid is more preferably 0.05 weight part or lower, still more preferably 0.04 weight part or lower, even more preferably 0.03 weight part or lower. A content of oxalic acid in this range hardly forms precipitates in the packaged beverage according to the present invention, and therefore, is preferred from the standpoint of the appearances of the product.

To make an improvement in the taste, the sweetener (C) is used in the packaged beverage according to present claim 1. As the sweetener (C), an artificial sweetener, carbohydrate or glycerol can be used. Such a sweetener is contained at from 0. 001 to 10 wt%. A content lower than 0.0001 wt% provides substantially no sweetness, and cannot achieve a balance with sour and salty tastes. A content higher than 15 wt%, on the other hand, results in excessive sweetness, so that a feeling of being caught in the throat is strong, thus giving an unpleasant feeling when the beverage is swallowed.

Among such sweeteners, examples of the artificial sweetener include high-sweetness sweeteners such as aspartame, saccharin, cyclamate, acesulfame-K, L-aspartyl-L-phenylalanine lower alkyl ester sweetener, L-aspartyl-D-alanine amide, L-aspartyl-D-serine amide, L-aspartyl-hydroxymethylalkanamide sweetener, L-aspartyl-1-hydroxyethylalkanamide sweetener, sucralose and thaumatin, sugar alcohols such as erythritol, xylitol and trehalose, glycyrrhizin, and synthetic alkoxyaromatic compounds. Stevioside and other natural-source sweeteners are also usable. The content of such an artificial sweetener can be from 0.001 to 10 wt%.

As a carbohydrate-based sweetener, a soluble carbohydrate is used. A soluble carbohydrate has roles as a sweetener and also, as an energy source. Upon selecting a carbohydrate to be used in the beverage, it is important as a selection standard to assure a sufficient gastric emptying rate and intestinal absorption rate. The carbohydrate can be a mixture of glucose and fructose, or a carbohydrate hydrolyzable into glucose and fructose or capable of forming glucose and fructose in the digestive tract. The term "carbohydrate" as used herein includes monosaccharides, disaccharides, oligosaccharides, conjugated polysaccharides, and mixtures thereof.

Monosaccharides include tetroses, pentoses, hexoses and ketohexoses. Examples of the hexoses are aldohexoses such as glucose known as grape sugar. The content of glucose in each of the packaged beverage according to the present invention may be from 0.001 to 10 wt%, still more preferably from 0.001 to 10 wt%. Fructose known as "fruit sugar" is a ketohexose. The content of fructose in the packaged beverage according to the present invent ion may be from 0.001 to 10 wt%, still more preferably from 0.001 to 10 wt%.

Among sweeteners useful in the packaged beverage according to the present invention, oligosaccharides include carbohydrates capable of forming these two types of monosaccharides in the body (i.e., sucrose, maltodextrin, corn syrup, and fructose-rich corn syrup). Of these saccharides, those of an important type are disaccharides. An illustrative disaccharide is sucrose known as cane sugar or beet sugar. The content of sucrose in the packaged beverage according to the present invention maybe from 0.001 to 10 wt%, still more preferably from 0.001 to 10 wt%.

Preferred examples of the conjugated polysaccharides usable as sweeteners in the present invention are maltodextrins. A maltodextrin is a conjugated polysaccharide the length of which is composed of several glucose units. They are, for example, spray-dried conjugated polysaccharides obtained by the hydrolysis of corn starch. The dextrose equivalent of a maltodextrin is an index of a degree of hydrolysis of a starch polymer.

Carbohydrate-based sweeteners preferred in the present invention are each composed of a combination of fructose and glucose which serve as an energy source capable of supplying necessary calories. As sucrose is hydrolyzed into fructose and glucose in the digestive tract, sucrose can be used as a supply source for fructose and glucose. These saccharides are energy foods which can be completely used by body cells. The total content of carbohydrates usable in the packaged beverage according to the present invention is from 0.001 to 10 wt% based on the whole weight. The total carbohydrate content includes not only those naturally contained in a fruit juice or tea extract but also one or more carbohydrates added. Carbohydrate derivatives, polyhydric alcohols, for example, glycerols, and artificial sweeteners may also be used in the present invention such that they supply sweetener sources and are readily absorbed and distributed throughout the body to supply energy. In the packaged beverage according to the present invention, glycerols can be used at from 0.1 to 10 wt%.

The packaged beverage according to the present invention contains from 0.003 to 0.2 wt % of sodium ions (D) and from 0.003 to 0.12 wt% of potassium ions (E). A concentration of sodium ions (D) or potassium ions lower than 0.001 wt% is not preferred, because the beverage may be felt insufficient in taste depending on the scene in which it is taken and further, no effective replenishment of minerals may be feasible. A concentration higher than 0.5 wt%, on the other hand, results in a strong taste of salt itself, and therefore, is not preferred for long-term drinking. Such a high concentration also leads to a substantial change in color tone when stored at high temperatures, and therefore, is not preferred. The ingredients of the sodium ions (D) and potassium ions (E) in the present invention are derived from water-soluble ingredients or inorganic salts. They also exist in a fruit extract and tea extract.

As the sodium ions (D), a readily-available sodium salt such as sodium chloride, sodium carbonate, sodium hydrogencarbonate, sodium citrate, sodium phosphate, sodium hydrogenphosphate, sodium tartrate, sodium benzoate or a mixture thereof may be mixed, and those derived from an added fruit extract or tea ingredients are also included. A lower sodium ion concentration is more desired in facilitating the absorption of water under osmotic pressure, but it is important in the present invention that the sodium ion concentration is of such a level that no water is sucked from the body into the intestine under osmotic pressure. A sodium ion concentration needed to meet this requirement is preferably lower than the plasma sodium ion concentration Turning to the long-term effect on the color tone at high temperatures, the degree of a color change became greater with the concentration of sodium ions. From the viewpoints of physiological effects and stability, the content of sodium ions (D) in the packaged beverage according to the present invention is from 0.003 to 0.2 wt%.

As potassium ions (E), a potassium salt such as potassium chloride, potassium carbonate, potassium sulfate, potassium acetate, potassium hydrogencarbonate, potassium citrate, potassium phosphate, potassium hydrogen phosphate, potassium tartrate, potassium sorbate or a mixture thereof may be mixed, and those derived from a fruit extract or tea ingredients are also included. Compared with the sodium ion concentration, the sodium ion concentrate has been confirmed to have a tendency of giving a greater long-term effect on the color tone when stored at high temperatures. From the viewpoint of stability, the content of potassium ions (E) in the packaged beverage according to the present invention is from 0.003 to 0.12 wt%.

In addition to the sodium ions (D) and potassium ions (E), the beverage according to the present invention may also contain from 0.001 to 0.5 wt%, preferably from 0.002 to 0.4 wt%, more preferably from 0.003 to 0.3 wt% of chloride ions. This chloride ion ingredient can be mixed in the form of a salt such as sodium chloride or potassium chloride. Other trace ions such as calcium, magnesium, zinc and iron ions may also be added. These ions may also be added in the form of salts. The total level of existing ions includes, in addition to the amounts of added ions, the amounts of ions naturally existing in the beverage. When sodium chloride is added, for example, its corresponding amount of sodium ions and its corresponding amount of chloride ions should also be included in the total amount of individual ions accordingly.

The pH of the packaged beverage according to the present invention is from 2 to 6. A pH lower than 2 provides the beverage with a strong sour taste and pungent smell, so that the beverage is not suited for drinking. ApH higher than 6, on the other hand, makes it impossible to provide a balanced flavor and taste, leading to a deterioration in taste. Moreover, the stability is also deteriorated. A preferred pH is from 2 to 5, with a pH of from 2 to 4.5 being more preferred.

The packaged beverage according to the present invention is obtained by adjusting the composition of a green tea extract and mixing other necessary ingredients. As a method for controlling ingredients into the above-described composition, it is possible to adjust the content ratio of quinic acid or a salt thereof (B) to non-polymer catechins (A) in the production process of the beverage or the content ratio of quinic acid or a salt thereof (B) to non-polymer catechins (A) in the green tea extract such that the content ratio falls within the above-described [(B)/(A)] ratio. Upon adjusting the composition of a concentrate of green tea extract, it is preferred to adjust the content of quinic acid in a concentrate of green tea extract, said concentrate containing from 20 to 90 wt% of non-polymer catechins based on its solid content, such that the content weight ratio [(B) /(A)] of quinic acid or a salt thereof (B) to non-polymer catechins (A) falls within the range of from 0.002 to 0.1.
The "green tea extract" as used herein can be obtained by further purifying a concentrate of an extract of tea leaves in hot water or a water-soluble organic solvent or directly purifying the extract such that the content ratio of quinic acid (B) to non-polymer catechins (A) is controlled.
A concentrate of green tea extract, such as commercially-available "POLYPHENON" (Mitsui Norin Co., Ltd.), "TEAFURAN" (ITOEN, LTD.) or "SUNPHENON" (Taiyo Kagaku Co., Ltd.), may be adjusted in composition. Described specifically, the concentrate can be used by adjusting the content ratio of quinic acid to non-polymer catechins.

As a purification method of a concentrate of green tea extract, the concentrate of green tea can be purified, for example, by suspending the concentrate of green tea extract in water or a mixture of water and an organic solvent, adding an organic solvent to the resultant suspension, removing the resulting precipitate, and then, distilling off the solvent; or by dissolving the concentrate of green tea extract in an organic solvent, adding water or a mixture of water and an organic solvent to the resultant solution, removing the resulting precipitate, and then, distilling off the solvent. It is possible to dissolve a concentrate of green tea extract, said concentrate containing from 20 to 90 wt% of non-polymer catechins based on a solid content, in a 9/1 to 1/9 mixed solution of an organic solvent and water and then to bring the resulting solution into contact with activated carbon and acid clay or activated clay. In addition to those mentioned above, it is also possible to use one obtained by purification through supercritical extraction or one obtained by having the concentrate of green tea extract adsorbed on an adsorbent resin and eluting it with an ethanol solution.

As the form of the "green tea extract" as used herein, various forms can be mentioned such as a solid, aqueous solution and slurry. For a shorter history of being dried or the like, the form of an aqueous solution or slurry is preferred.

The green tea extract for use in the present invention may be one subjected to an adjustment in composition such that the content weight ratio [(B) / (A)] of quinic acid or a salt thereof (B) to non-polymer catechins (A) falls within the range 0.002 to 0.1, preferably from 0.002 to 0.05. A[(B)/(A)] ratio in this range is preferred, because no strong bitterness, astringency or puckeriness is produced, sufficient effect is available for an improvement in the residual perception of the beverage, the sourness of quinic acid is adequate, and the flavor and taste of the beverage are not impaired. Such a [(B) / (A)] ratio is also preferred, because the beverage is free of a residual perception remaining on the tongue after drinking although such a residual perception is specific to beverages with catechins contained at high concentration and therefore, the beverage is good in the disappearance of an aftertaste.

The concentration of non-polymer catechins in the green tea extract for use in the present invention can be preferably from 20 to 90 wt%, more preferably from 20 to 87 wt%, even more preferably from 23 to 85 wt%, even more preferably from 25 to 82 wt%.
If the concentration of non-polymer catechins in a green tea extract is lower than 20 wt%, a purified product itself of a green tea extract should be added at a higher concentration to a beverage. If the concentration of non-polymer catechins in a green tea extract exceeds 90 wt%, on the other hand, there is a tendency that trace components and the like other than total polyphenols - which are represented by free amino acids, exist in the green tea extract and serve to improve the flavor and taste - are excluded.

The percentage of gallates, which is a generic term and consists of catechingallate, epicatechingallate, gallocatechingallate and epigallocatechingallate, based on all non-polymer catechins in the green tea extract for use in the present invention can preferably be from 35 to 100 wt% from the standpoint of the effectiveness of physiological effects of the non-polymer catechins. From the standpoint of the readiness in adjusting the taste, the percentage of gallate may be more preferably from 35 to 98 wt%, still more preferably from 35 to 95 wt%.

The mixing of a bitterness suppressor to the packaged beverage according to the present invention facilitates its drinking and therefore, is preferred. As the bitterness suppressor to be used, a cyclodextrin is preferred. As the cyclodextrin, an α-, β- or γ-cyclodextrin or a branched α-, β- or γ-cyclodextrin can be used. In the beverage, a cyclodextrin may be contained at a concentration of from 0.005 to 0.5 wt%, preferably from 0.01 to 0.3 wt%. In the packaged beverage according to the present invention, it is possible to mix, in combination with ingredients derived from tea and as ingredient or ingredients which can be added from the standpoint of formulation, either singly or in combination with additives such as antioxidants, flavorings, various esters, organic acids, organic acid salts, inorganic acids, inorganic acid salts, inorganic salts, colorants, emulsifiers, preservatives, seasoning agents, sweeteners, sour seasonings, gums, emulsifiers, oils, vitamins, amino acids, fruit extracts, vegetable extracts, flower honey extracts, pH regulators and quality stabilizers.

A flavoring and/or a fruit extract can be mixed in the beverage according to the present invention to make an improvement in taste. In general, fruit extract is called "fruit juice", while flavoring is called "flavor". Natural or synthetic flavorings and fruit extracts can be used in the present invention. They can be selected from fruit juices, fruit flavors, plant flavors, or mixtures thereof. In particular, a combination of a tea flavor, preferably a green tea or black tea flavor in combination with a fruit juice has a preferred taste. Preferred fruit extracts include juices of apple, pear, lemon, lime, mandarin, grapefruit, cranberry, orange, strawberry, grape, kiwi, pineapple, passion fruit, mango, guava, raspberry and cherry. More preferred are citrus juices, with grapefruit, orange, lemon, lime and mandarin juices, mango juice, passion fruit juice and guava juice, and mixtures thereof being even more preferred. Preferred natural flavors are jasmine, chamomile, rose, peppermint, Crataegus cuneata, chrysanthemum, water caltrop, sugar cane, bracket fungus of the genus Formes (Formes japonicus), bamboo shoot, and the like. A fruit extract may be contained preferably at from 0.001 to 20 wt%, more preferably at from 0.002 to 10 wt% in the beverage according to the present invention. One or more of fruit flavors, plant flavors, tea flavors or mixtures thereof can be used as a flavoring. Particularly preferred flavorings are citrus flavors including orange flavor, lemon flavor, lime flavor and grape fruit flavor. As other fruit flavors, apple flavor, grape flavor, raspberry flavor, cranberry flavor, cherry flavor, pineapple flavor and the like can be used. These flavors may be natural products such as fruit juices and balms, or synthetic products. The term "flavoring" as used herein can also include blends of various flavors, for example, a blend of lemon and lime flavors and blends of citrus flavors and selected spices (typically, flavors for cola and other soft drinks). As flavorings consisting of hydrophobic concentrates or extracts, synthetic flavor esters, alcohols, aldehydes, terpenes, sesquiterpenes and the like can be mixed. Such a flavoring may be contained preferably at from 0.0001 to 5 wt%, more preferably at from 0.001 to 3 wt% in the beverage according to the present invention.

The beverage according to the present invention may also contain a sour seasoning. The sour seasoning can be used to maintain the pH of the beverage according to the present invention within a range of from 2 to 6. Acids can be used either in non-dissociated forms or in the form of their sodium or potassium salts. As preferred acids, edible organic acids and inorganic acids can be mentioned including citric acid, malic acid, fumaric acid, adipic acid, gluconic acid, tartaric acid, ascorbic acid, acetic acid, phosphoric acid, and mixtures thereof. More preferred acids are citric acid and malic acid. These sour seasonings are also useful as antioxidants which stabilize beverage ingredients. Examples of other antioxidants include ascorbic acid and plant extracts.

In the beverage according to the present invention, one or more vitamins can be incorporated further. Preferred vitamins include vitamin A, vitamin C, and vitamin E. Other vitamins such as vitamin D and vitamin B may also be used. One or more minerals can also be used in the beverages according to the present invention. Preferred minerals include calcium, chromium, copper, fluorine, iodine, iron, magnesium, manganese, phosphorus, selenium, silicon, molybdenum, and zinc. More preferred minerals are magnesium, phosphorus, and iron.

Preferred as the beverage in the packaged beverage according to the present invention is a non-tea-based beverage, for example, a non-tea-based beverage obtained by adding to a green tea extract one or more ingredients selected from sodium ions and/or potassium ions, sweeteners, bitterness suppressors, flavorings, fruit extracts, vegetable extracts, sour seasonings, vitamins, minerals, carbon dioxide.
Non-tea-based, packaged beverages include, for example, carbonatedbeverages as soft drinks, beverages with fruit extracts, juices with vegetable extracts, near waters, sport drinks, diet drinks.

As in general beverages, a package useful with the packaged beverage according to the present invention can be provided in a conventional form such as a molded package made of polyethylene terephthalate as a principal component (a so-called PET bottle), a metal can, a paper container combined with metal foils or plastic films, a bottle or the like. The term "packaged beverage" as used herein means a beverage that can be taken without dilution.

The packaged beverage according to the present invention can be produced, for example, by filling the beverage in a package such as a metal can and, when heat sterilization is feasible, conducting heat sterilization under sterilization conditions as prescribed in the Food Sanitation Act. For those which cannot be subjected to retort sterilization like PET bottles or paper packages, a process is adopted such that the beverage is sterilized beforehand at a high temperature for a short time under similar sterilization conditions as those described above, for example, by a plate-type heat exchanger or the like, is cooled to a particular temperature, and is then filled in a package. Under aseptic conditions, additional ingredients may be mixed to and filled in a beverage-filled package. It is also possible to conduct an operation such that subsequent to heat sterilization under acidic conditions, the pH is caused to rise back to neutral under aseptic conditions or that subsequent to heat sterilization under neutral conditions, the pH is caused to drop back to the acidic side under aseptic conditions.

### Examples

### Measurement of catechins

A high-performance liquid chromatograph (model: "SCL-10AVP") manufactured by Shimadzu Corporation was used. The chromatograph was fitted with an octadecyl-introduced, packed LC column, "L-Column, TMODS" (4.6 mm × 250mm; product of Chemicals Evaluation and Research Institute, Japan). A packaged beverage, which had been filtered through a filter (0.8 µm) and then diluted with distilled water, was subj ected to chromatography at a column temperature of 35°C by gradient elution. A 0.1 mol/L solution of acetic acid in distilled water and a 0.1 mol/L solution of acetic acid in acetonitrile were used as mobile phase solution A and mobile phase solution B, respectively. The measurement was conducted under the conditions of 20 µL injected sample quantity and 280 nm UV detector wavelength.

### Measurement of quinic acid

The Japan Food Research Laboratories method relying upon HPLC
Each sample (2 g) was filtered subsequent to ultrasonication, and was then measured by high-performance liquid chromatography.
- Model:: "LC-10AD" (Shimadzu Corporation)
- Detector:: UV-visible spectrophotometer, "SPD-6AV" (Shimadzu Corporation)
- Column:: "TSKGEL OApak" (7.8 mm in diameter × 300 mm, TOSOH CORPORATION)
- Column temperature:: 40°C
- Mobile phase:: 0.75 mmol/L sulfuric acid
- Reaction solution:: 15 mmol/L solution of disodium hydrogenphosphate, which contained 0.2 mmol/L bromothymol blue.
- Measurement: wavelength: 445 nm
- Flow rates:: Mobile phase - 0.8 mL/min Reaction solution - 0.8 mL/min

### Measurement of oxalic acid

An ion chromatograph (model: DXAQ1110, manufactured by Japan Dionex Co., Ltd.) was fitted with a column, "IonPac AS4A-SC" (4 × 250 mm) and was connected to a suppressor, "ASRS-ULTRA" (manufactured by Dionex Corporation). Measurement of oxalic acid was performed in the recycle mode. As mobile phases, 1.8 mmol/L Na₂CO₃ and 1.7 mmol/L NaHCO₃ were fed at 1.0 mL/min. The injected sample quantity was set at 25 µL. An electrical conductivity detector was used as a detector.

### Quantitation of sodium ions

Atomic fluorescence spectroscopy (extraction with hydrochloric acid)
Each sample (5 g) was placed in 10% hydrochloric acid (to provide a 1% HCl solution when dissolved to a predetermined volume). With deionized water, the resulting solution was then brought to the predetermined volume, and its absorbance was measured.
Wavelength: 589.6 nm
Flame: acetylene-air

### Quantitation of potassium ions

Atomic fluorescence spectroscopy (extraction with hydrochloric acid)
Each sample (5 g) was placed in 10% hydrochloric acid (to provide a 1% HCl solution when dissolved to a predetermined volume). Withdeionizedwater, the resulting solution was then brought to the predetermined volume, and its absorbance was measured.

### Examples 1-6 & Comparative Examples 1-6

Packaged beverages were each produced by mixing the corresponding ingredients shown in Table 1 or Table 2 and then conducting predetermined post-treatment.

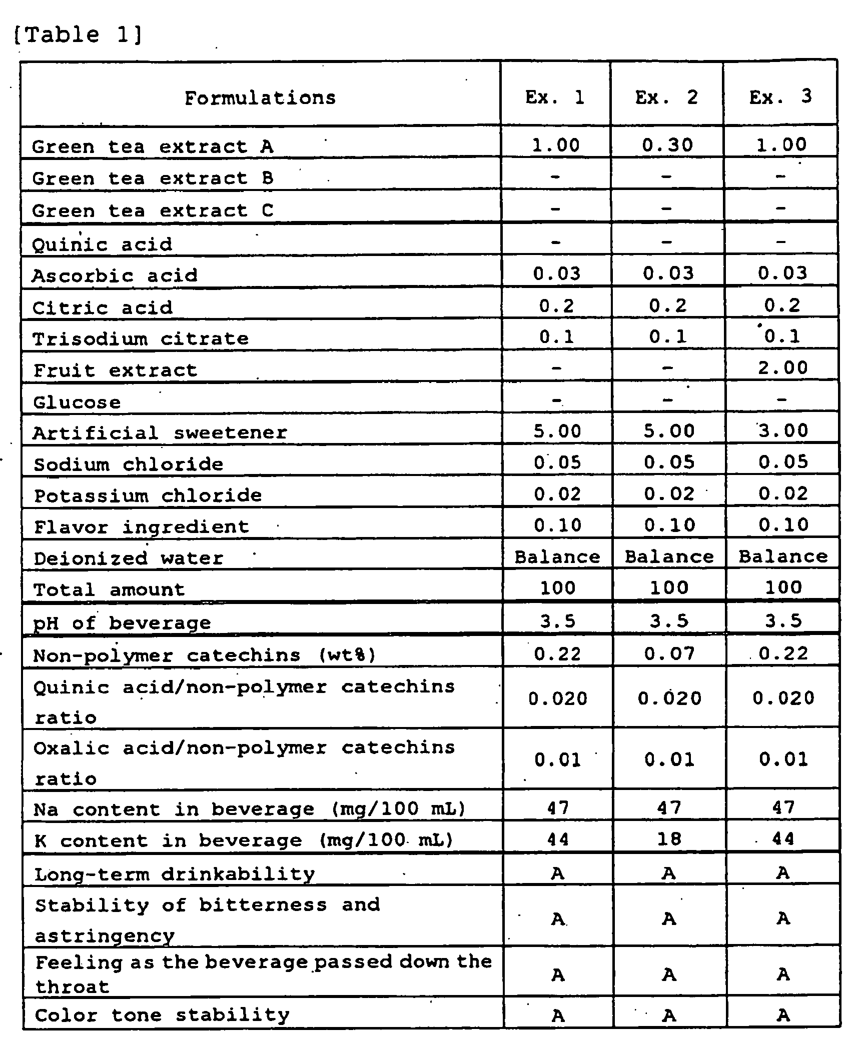

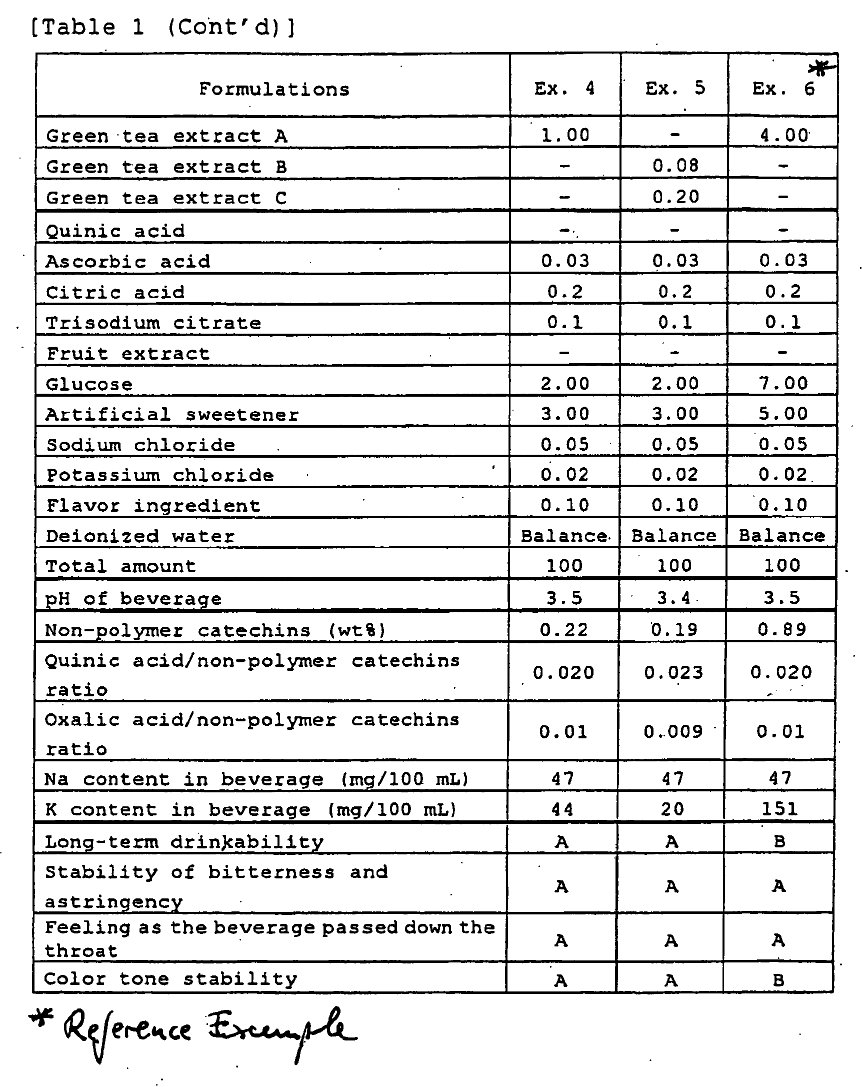

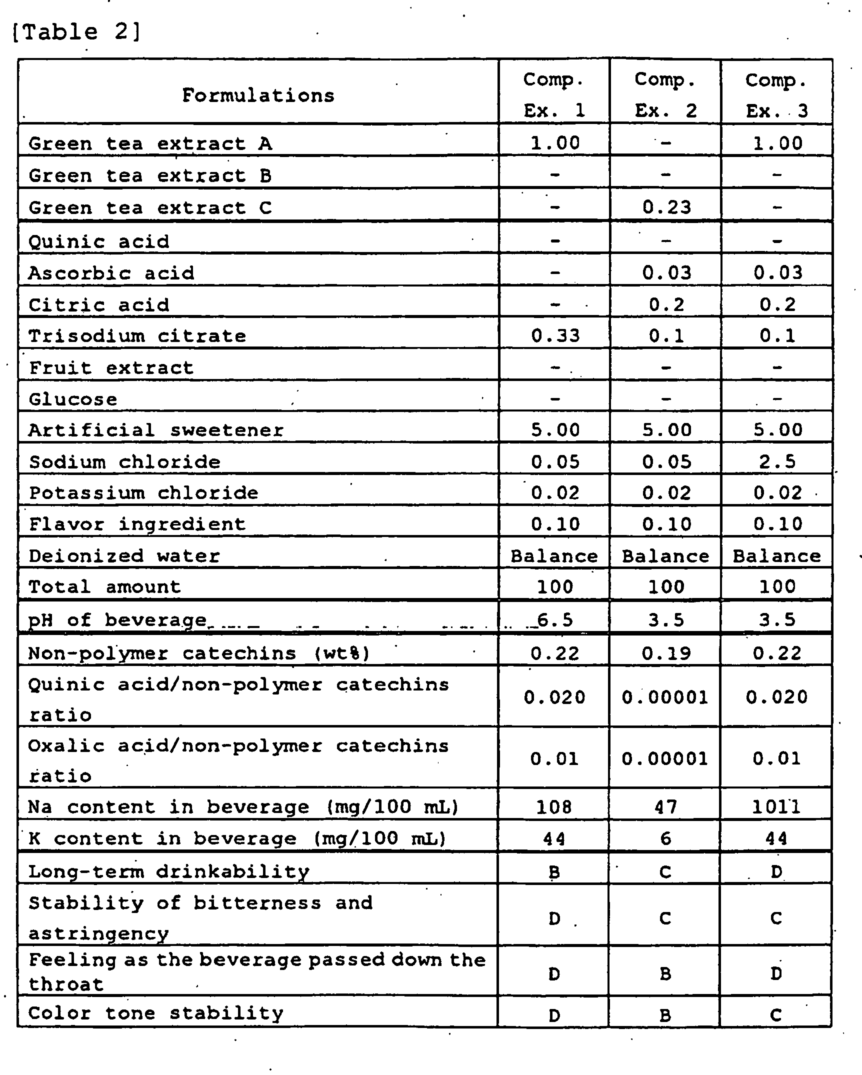

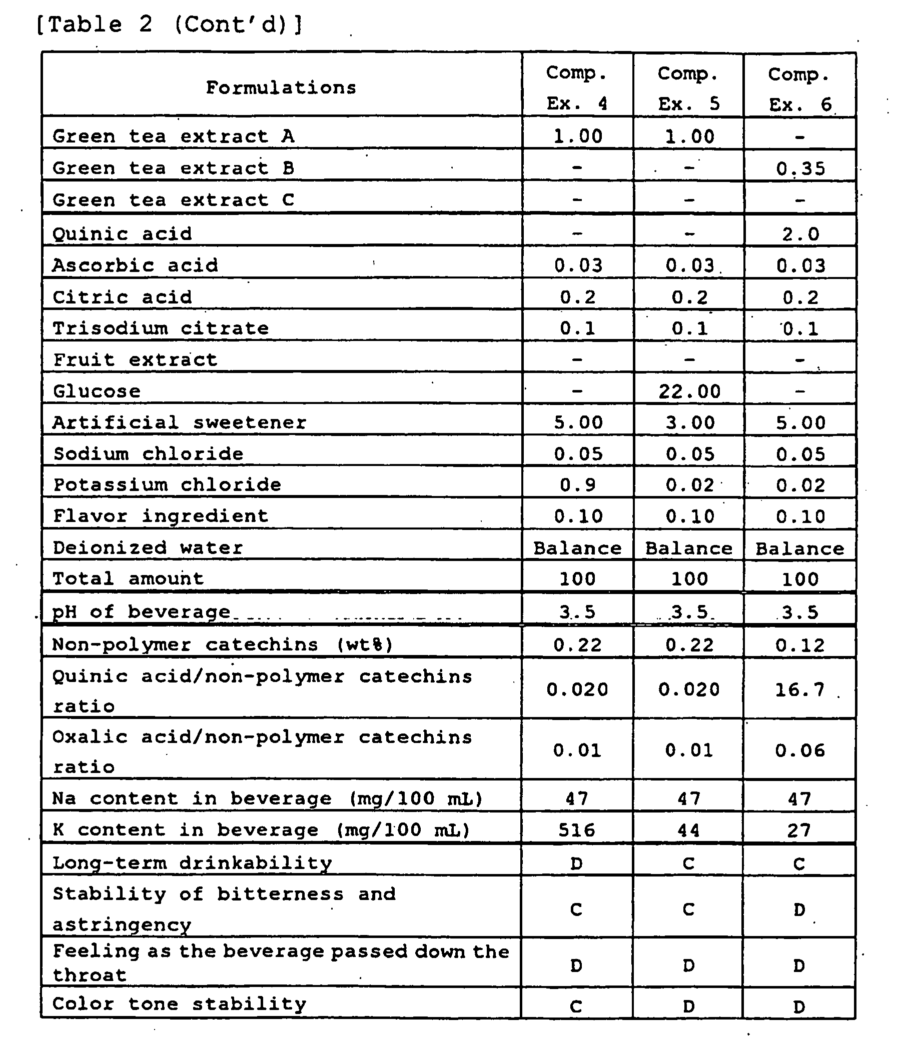

### (*1) Green tea extract A

"POLYPHENON HG" (100 g, product of Tokyo Food Techno Co. , Ltd.) was suspended as a concentrate of green tea extract in a 95% aqueous solution of ethanol (490.9 g) at room temperature under a stirring condition of 250 rpm. After activated carbon "KURARAY COAL GLC" (20 g, product of Kuraray Chemical K.K.) and acid clay "MIZKA ACE #600" (35 g, product of Mizusawa Chemical Industries, Ltd.) were poured, the resulting mixture was continuously stirred for about 10 minutes. Subsequent to the dropwise addition of a 40% aqueous solution of ethanol (409.1 g) over 10 minutes, stirring was continued for about 30 minutes still at room temperature. After the activated carbon and a precipitate were filtered off by No. 2 filter paper, the filtrate was filtered again through a 0.2 µm membrane filter. Finally, deionized water (200 g) was added to the filtrate, and ethanol was distilled off at 40°C and 0.0272 kg/cm² to obtain the product.
After the treatment, the content of non-polymer catechins was 22 wt%.
The weight ratio of quinic acid to non-polymer catechins after the treatment = 0.02
The weight ratio of oxalic acid to non-polymer catechins after the treatment = 0.01

### (*1) Green tea extract B

A concentrate of green tea extract. The content of non-polymer catechins was 33.70 wt%. The percentage of gallates was 50.7 wt%. The weight ratio of quinic acid to non-polymer catechins = 0.16. The weight ratio of oxalic acid to non-polymer catechins = 0.06.

### (*1) Green tea extract C

A purified product of green tea extract. The content of non-polymer catechins was 81.40 wt%. The percentage of gallates was 60.5 wt%. The weight ratio of quinic acid to non-polymer catechins = 0.00001. The weight ratio of oxalic acid to non-polymer catechins = 0.00001.

Quinic acid (reagent, product of Tokyo Kasei Kogyo Co., Ltd.)

### <Production process of the packaged beverages of Examples 1-6 and Comparative Examples 1-6>

In accordance with each typical sport drink formulation shown in Table 1 or Table 2, the individual ingredients (weight parts) were mixed together, and deionized water was then added to bring the total volume to 100 mL so that a mixed solution was prepared. Based on the Food Sanitation Act, sterilization and hot-pack filling were conducted to produce a packaged beverage. Ingredient data of the beverage are also shown. An assessment was performed as to whether or not each beverage had a taste reduced in bitterness and astringency and suited for long-term drinking as intended in the present invention. Thirty male monitors were used. Those monitors were instructed to continuously ingest the beverages as much as 500 mL per clay for 1 month, respectively, and after the continued one-month drinking, to give ranking scores to their assessments of the beverages in accordance with the following standards.

A: Suited
B: Suited a little
C: A little difficult to drink
D: Not suited for drinking
The stability of bitterness and astringency was assessed using 30 male monitors. Those monitors were instructed to ingest the beverages as much as 500 mL at a time, shortly after the production of the beverages and after their storage at 55°C for 7 days, and were then instructed to give ranking scores to their assessments of the thus-stored beverages relative to the beverages shortly after the production in accordance with the following standards.

A: Not changed
B: Slightly changed
C: Changed
D: Substantially changed
The feelings felt as the beverages were swallowed were assessed using 30 trained male monitors. Those monitors were instructed to ingest the beverages as much as 500 mL at a time, and were then instructed to give ranking scores in accordance with the following standards.

Feeling as each beverage was swallowed
A: Good
B: A little better
C: A little poorer
D: Poor
Concerning the color tone stability of each beverage, the beverage produced and filled in a clear PET bottle of 500-mL capacity was stored at 55°C for 1 month. Trained ten assessors were instructed to visually give ranking scores to a change in the color tone of the beverage during its storage in accordance with the following standards.
A: Not changed
B: Slightly changed
C: Changed
D: Substantially changed

The sports drink (Comparative Example 1), which used the green tea extract A and had a pH outside the range in the present invention, was strong in bitterness and was poor in long-term drinkability and the feeling when the beverage was swallowed. In particular, Comparative Example 6 of high quinic acid content was strong in the flavor and taste of green tea. Comparative Example 2 of low quinic acid content, on the other hand, was good in the initial feeling as it passed down the throat, but was poor in the stability of bitterness and astringency and was not suited for long-term drinking. Examples 1-5, owing to the use of the purified products of green tea extract and the adjustment into the beverage composition specified by the present invention, were free not only of the flavor and taste of green tea but also of other foreign flavor and taste, were reduced in bitterness and astringency and were suited for long-term drinking, hardly changed in external appearance when stored at high temperatures, and remained stable in color tone over a long term even when filled and stored in clear containers.

## Claims

1. A packaged beverage of pH 2 to 6 with a green tea extract mixed therein, comprising the following ingredients (A) to (E):
(A) from 0.1 to 0.3 wt% of non-polymer catechins,
(B) quinic acid or a salt thereof,
(C) from 0.001 to 10 wt% of a sweetener,
(D) from 0.003 to 0.2 wt.% of sodium ions, and
(E) from 0.003 to 0.12 wt.% of potassium ions,
wherein a content weight ratio [(B) / (A)] of said quinic acid or salt thereof (B) to said non-polymer catechins (A) is from 0.002 to 0.1.

2. The packaged beverage according to claim 1, wherein a content of oxalic acid is not greater than 0.06 in terms of a weight ratio to said non-polymer catechins (A).

3. The packaged beverage according to claim 1 or 2,
wherein said beverage is a beverage selected from the group consisting of carbonated beverages as soft drinks, beverages with fruit extracts, juices with vegetable extracts, near waters, sport drinks and diet drinks.

4. The packaged beverage according to any one of claims 1-3, which has a pH of from 2 to 5.

5. The packaged beverage according to any one of claims 1-4, wherein said sweetener (C) is an artificial sweetener.

6. The packaged beverage according to any one of claims 1-5, packaged in a volume of 350-500 ml and containing at least 300 mg of non-polymer catechins.

7. The packaged beverage according to any one of claims 1-6, which is filled in a clear container.

8. A process for producing a packaged beverage having pH 2 to 6, comprising the following ingredients (A) to (E):
(A) from 0.1 to 0.3 wt.% of non-polymer catechins,
(B) quinic acid or a salt thereof,
(C) from 0.001 to 10 wt.% of a sweetener,
(D) from 0.003 to 0.2 wt.% of sodium ions, and
(E) from 0.003 to 0.12 wt.% of potassium ions,
wherein the process comprises a step for adding to the beverage a green tea extract adjusted such that the content weight ratio [(B)/(A)] of quinic acid or a salt thereof (B) to non-polymer catechins (A) falls within the range of from 0.002 to 0.1, with adjusting the content of quinic acid in a concentrate of the green tea extract containing from 20 to 90 wt.% of non-polymer catechins based on its solid content.

9. The process according to claim 8, wherein the concentrate of the green tea extract is allowed to dissolve into a 9/1 to 1/9 mixed solution of an organic solvent and water and then to bring the resulting solution into contact with activated carbon and acid clay or activated clay.

## Patentansprüche

1. Abgepacktes Getränk mit einem pH von 2 bis 6 mit einem darin gemischten Grünteeextrakt, umfassend die folgenden Bestandteile (A) bis (E):
(A) von 0,1 bis 0,3 Gew.% Nicht-Polymer-Catechine,
(B) Chininsäure oder ein Salz davon,
(C) von 0,001 bis 10 Gew.% eines Süßstoffes,
(D) von 0,003 bis 0,2 Gew.% Natriumionen und
(E) von 0,003 bis 0,12 Gew.% Kaliumionen,
worin das Gewichtsverhältnis des Gehaltes [(B)/(A)] der Chininsäure oder des Salzes davon (B) zu den Nicht-Polymer-Catechinen (A) von 0,002 bis 0,1 ist.

2. Abgepacktes Getränk nach Anspruch 1, worin der Gehalt an Oxalsäure nicht größer als 0,06 ist, ausgedrückt als Gewichtsverhältnis zu den Nicht-Polymer-Catechinen (A).

3. Abgepacktes Getränk nach Anspruch 1 oder 2, worin das Getränk ein Getränk ist, ausgewählt aus der Gruppe, bestehend aus carbonisierten Getränken wie Erfrischungsgetränken, Getränken mit Fruchtextrakten, Säften mit Pflanzenextrakten, reinem Wasser, Sportgetränken und Diätgetränken.

4. Abgepacktes Getränk nach einem der Ansprüche 1 bis 3, das einen pH von 2 bis 5 hat.

5. Abgepacktes Getränk nach einem der Ansprüche 1 bis 4,
worin der Süßstoff (C) ein künstlicher Süßstoff ist.

6. Abgepacktes Getränk nach einem der Ansprüche 1 bis 5, abgepackt in einem Volumen von 350-500 ml und umfassend zumindest 300 mg Nicht-Polymer-Catechine.

7. Abgepacktes Getränk nach einem der Ansprüche 1 bis 6, das in einen klaren Behälter gefüllt ist.

8. Verfahren zur Erzeugung eines abgepackten Getränkes mit einem pH von 2 bis 6, umfassend die folgenden Bestandteile (A) bis (E):
(A) von 0,1 bis 0,3 Gew.% Nicht-Polymer-Catechine,
(B) Chininsäure oder ein Salz davon,
(C) von 0,001 bis 10 Gew.% eines Süßstoffes,
(D) von 0,003 bis 0,2 Gew.% Natriumionen und
(E) von 0,003 bis 0,12 Gew.% Kaliumionen,
worin das Verfahren einen Schritt zur Zugabe eines Grünteeextraktes zum Getränk so umfasst, dass das Gewichtsverhältnis des Gehaltes [(B)/(A)] von Chininsäure oder einem Salz davon (B) zu den Nicht-Polymer-Catechinen (A) innerhalb des Bereiches von 0,002 bis 0,1 fällt, wobei der Gehalt an Chininsäure in einem Konzentrat des Grünteeextraktes, umfassend von 20 bis 90 Gew.% Nicht-Polymer-Catechine fällt, bezogen auf den Feststoffgehalt.

9. Verfahren nach Anspruch 8, worin das Konzentrat des Grünteeextraktes sich in einer 9/1 bis 1/9 gemischten Lösung aus einem organischen Lösungsmittel und Wasser auflösen kann und dann die resultierende Lösung mit Aktivekohle und saurem Lehm oder Aktivlehm kontaktiert wird.

## Revendications

1. Boisson conditionnée de pH 2 à 6 avec un extrait de thé vert mélangé dans celle-ci, comprenant les ingrédients (A) à (E) suivants :
(A) de 0,1 à 0,3 % en poids de catéchines non polymériques,
(B) de l'acide quinique ou un sel de celui-ci,
(C) de 0,001 à 10 % en poids d'un édulcorant,
(D) de 0,003 à 0,2 % en poids d'ions sodium, et
(E) de 0,003 à 0,12 % en poids d'ions potassium,
dans laquelle un rapport pondéral de teneurs [(B)/(A)] dudit acide quinique ou du sel de celui-ci (B) auxdites catéchines non polymériques (A) est de 0,002 à 0,1.

2. Boisson conditionnée selon la revendication 1,
dans laquelle une teneur en acide oxalique n'est pas supérieure à 0,06 en termes de rapport pondéral auxdites catéchines non polymériques (A).

3. Boisson conditionnée selon la revendication 1 ou 2, dans laquelle ladite boisson est une boisson choisie dans le groupe constitué des boissons gazéifiées comme les sodas, des boissons avec des extraits de fruit, des jus avec des extraits de légume, des eaux à valeur ajoutée, des boissons pour sportifs et des boissons de régime.

4. Boisson conditionnée selon l'une quelconque des revendications 1 à 3, qui a un pH de 2 à 5.

5. Boisson conditionnée selon l'une quelconque des revendications 1 à 4, dans laquelle ledit édulcorant (c) est un édulcorant artificiel.

6. Boisson conditionnée selon l'une quelconque des revendications 1 à 5, conditionnée sous un volume de 350 à 500 ml et contenant au moins 300 mg de catéchines non polymériques.

7. Boisson conditionnée selon l'une quelconque des revendications 1 à 6, qui est remplie dans un récipient transparent.

8. Procédé pour produire une boisson conditionnée ayant un pH de 2 à 6, comprenant les ingrédients (A) à (E) suivants :
(A) de 0,1 à 0,3 % en poids de catéchines non polymériques,
(B) de l'acide quinique ou un sel de celui-ci,
(C) de 0,001 à 10 % en poids d'un édulcorant,
(D) de 0,003 à 0,2 % en poids d'ions sodium, et
(E) de 0,003 à 0,12 % en poids d'ions potassium,
dans lequel le procédé comprend une étape pour ajouter à la boisson un extrait de thé vert ajusté de sorte que le rapport pondéral de teneurs [(B)/(A)] de l'acide quinique ou d'un sel de celui-ci (B) à des catéchines non polymériques (A) se situe dans la plage de 0,002 à 0,1, avec un ajustement de la teneur en acide quinique dans un concentré de l'extrait de thé vert contenant de 20 à 90 % en poids de catéchines non polymériques sur la base de sa teneur en matières solides.

9. Procédé selon la revendication 8, dans lequel le concentré de l'extrait de thé vert est laissé dissoudre dans une solution mixte à 9/1 jusqu'à 1/9 d'un solvant organique et d'eau et puis porter la solution résultante au contact de charbon activé et d'argile acide ou d'argile activée.
